**Europäisches Patentamt**

**European Patent Office**

**Office européen des brevets**

(19)

(11) Numéro de publication : **0 533 525 B1**

(12) **FASCICULE DE BREVET EUROPEEN**

(45) Date de publication du fascicule du brevet :
**06.12.95 Bulletin 95/49**

(51) Int. Cl.⁶ : **G01S 13/84**

(21) Numéro de dépôt : **92402432.6**

(22) Date de dépôt : **04.09.92**

(54) **Système de mesure de distance entre deux stations mobiles l'une par rapport à l'autre.**

(30) Priorité : **18.09.91 FR 9111470**

(43) Date de publication de la demande :
**24.03.93 Bulletin 93/12**

(45) Mention de la délivrance du brevet :
**06.12.95 Bulletin 95/49**

(84) Etats contractants désignés :
**DE GB IT**

(56) Documents cités :
**WO-A-80/02601**
**FR-A- 2 631 725**
**GB-A- 1 156 183**

(73) Titulaire : **FRANCE TELECOM**
**Exploitant Autonome de Droit Public,**
**6, Place d'Alleray**
**F-75015 Paris (FR)**

(72) Inventeur : **Guena, Jean**
**30 Cité Morgane**
**F-22560 Trebeurden (FR)**
Inventeur : **Leost, Jean-Claude**
**13 Rue Jean Bart**
**F-22700 Perros Guirec (FR)**
Inventeur : **Meyer, Sylvain**
**Dernec'h en Bulat Pestivien**
**F-22160 Callac (FR)**

(74) Mandataire : **Cabinet Martinet & Lapoux**
**BP 405**
**F-78055 Saint Quentin en Yvelines Cédex (FR)**

## Description

La présente invention a trait de manière générale à un système de mesure de distance entre une station centrale et une ou plusieurs stations terminales mobiles par rapport à la station centrale, des circuits pour réaliser cette mesure étant inclus pour partie dans la station centrale et pour partie dans chaque station terminale.

Dans un tel système de mesure de distance, la station centrale doit, par émission d'ondes hyperfréquences vers une station terminale, être en mesure d'établir la distance variable la séparant de ladite station terminale.

Selon la technique antérieure, la station centrale mesure la distance entre les deux stations en émettant des ondes hyperfréquences en direction de la station terminale et en détectant des ondes réfléchies par ladite station terminale. La distance séparant les stations est calculée en fonction du produit d'un retard entre l'instant d'émission et l'instant de réception des ondes réfléchies par la vitesse de propagation desdites ondes. Par exemple, une réalisation de station centrale utilisant une telle relation inclut un émetteur émettant une onde hyperfréquence à fréquence variable, la fréquence variant en dent de scie. A des instants $t = t_0, t_1,..$ correspondant à des fréquences minimales d'émission, une "impulsion" hyperfréquence est émise par la station centrale vers une cible. Durant le temps de propagation d'émission et de réflexion de l'onde hyperfréquence, la fréquence de l'onde hyperfréquence produite par l'émetteur a augmenté linéairement, et à l'instant de réception de l'onde réfléchie, il est possible de déduire une distance à partir d'un écart de fréquence $\Delta f$ entre la fréquence d'émission et la fréquence générée par l'émetteur à l'instant de réception.

D'autres réalisations existent mais nécessitent toujours des circuits complexes et coûteux, limitant les applications à des secteurs privilégiés.

La présente invention vise à fournir un système de mesure de distance faisant appel à une liaison radio à modulation de phase connue entre les stations afin de produire des premières et secondes impulsions qui sont représentatives de la variation de phase, en signe et grandeur, de signaux démodulés dans la station centrale, la variation de phase dépendant de la distance entre les stations.

L'invention est applicable dans des domaines variés, tels que

- guidage, centrage, positionnement de pièces mécaniques;
- détection d'approche;
- détection anticollision pour véhicules;
- aide à l'accostage pour des navires;
- indication de niveau pour châteaux d'eau, écluses ou ascenseurs.

A cette fin, un système pour mesurer la distance entre des première et seconde stations mobiles l'une par rapport à l'autre, la seconde station comprenant des moyens pour moduler, par un signal numérique, un signal porteur émis par la première station en un signal modulé à deux états de phase qui est émis vers la première station, et la première station comprenant des moyens de démodulation et filtrage pour démoduler le signal modulé en deux signaux démodulés et filtrés en quadrature de phase, des moyens pour produire un premier signal logique ayant des niveaux logiques dépendants du signal du produit des signaux démodulés et filtrés, et des moyens pour produire un second signal logique ayant des niveaux logiques dépendant du signe de la différence des modules des signaux démodulés et filtrés, est caractérisé en ce que la première station comprend, en outre, un premier moyen pour générer des premières et secondes impulsions respectivement en réponse à des premières et secondes transitions de l'un des premier et second signaux logiques respectivement lorsque l'autre des premier et second signaux logiques est à des premier et second niveaux logiques, et en réponse aux première et seconde transitions dudit un des premier et second signaux logiques respectivement lorsque ledit autre des premier et second signaux logiques est aux second et premier niveaux logiques, et un moyen de comptage-décomptage pour compter les premières impulsions et décompter les secondes impulsions afin de produire un compte d'impulsions représentatif de ladite distance.

Par exemple, les premières impulsions sont générées lorsque la phase des signaux démodulés croît et la distance entre les stations augmente, et les secondes impulsions sont générées lorsque la phase des signaux démodulés décroît et la distance diminue. Dans ces conditions, le compte des moyens de comptage-décomptage est incrémenté par les premières impulsions et décrémenté par les secondes impulsions.

D'autres caractéristiques et avantages de la présente invention apparaîtront plus clairement à la lecture de la description suivante d'une réalisation préférée de l'invention en référence aux dessins annexés correspondants dans lesquels :

- la Fig. 1 est un bloc-diagramme schématique d'un système de mesure de distance entre deux stations;
- la Fig. 2 montre en détail un circuit de traitement analogique à base d'amplificateurs opérationnels inclus l'une des stations, telle que station centrale;
- la Fig. 3 montre en détail un circuit de traitement numérique à base de bascules monostables inclus dans la station centrale;
- la Fig. 4 est un diagramme de FRESNEL pour expliquer le fonctionnement du système de mesure selon l'invention;
- les Figs. 5A et 5B montrent deux diagrammes temporels relatifs au fonctionnement du circuit de traitement numérique; et

- la Fig. 6 est un bloc-diagramme d'un circuit de traitement numérique selon une seconde réalisation.

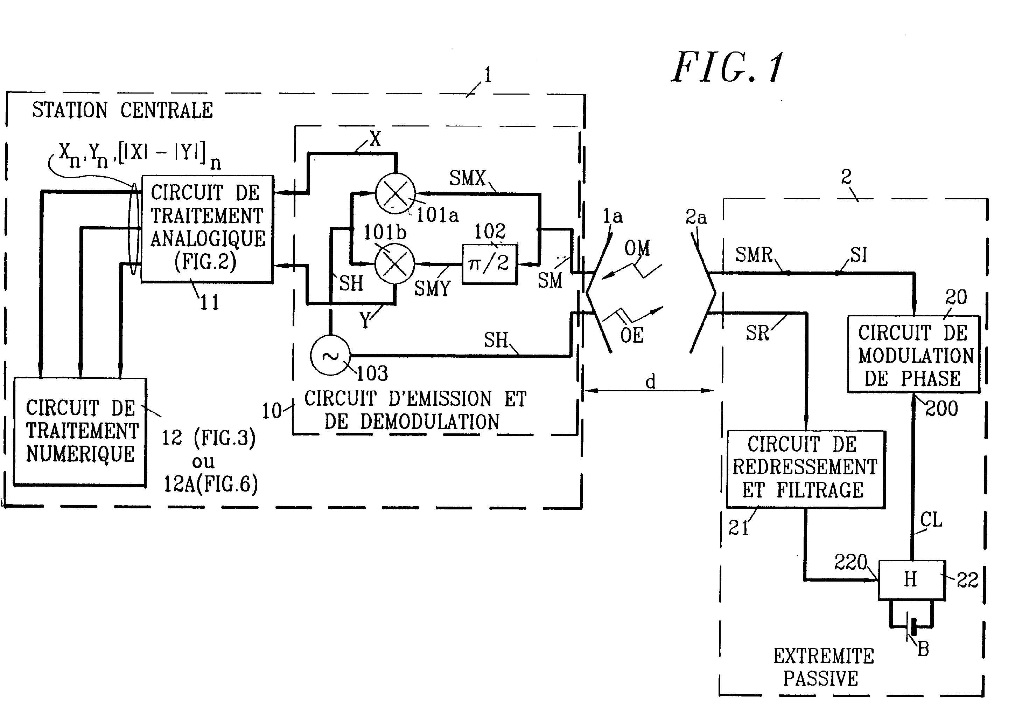

En référence à la Fig. 1, une mesure de distance d entre première station, telle qu'une station centrale 1, et une seconde station, telle qu'une station terminale du type extrémité passive 2, est réalisée au moyen de circuits spécifiques appartenant auxdites station et extrémité précitées. La station centrale 1 comprend un circuit d'émission et de démodulation 10, un circuit de traitement analogique 11, un circuit de traitement numérique 12 et une antenne 1a. L'extrémité passive 2, appelée également balise, inclut un circuit de modulation de phase 20, un circuit de redressement et filtrage 21, une horloge 22, une batterie B et une antenne 2a.

Le circuit d'émission et de démodulation 10 ainsi que l'extrémité passive 2 sont sensiblement analogues à ceux divulgués dans les demandes de brevet français FR-A-2.631.725 et FR-A-2.650.905 concernant des systèmes radio de transmission de données, et leur fonctionnement est rappelé ci-après.

Le circuit d'émission et de démodulation 10 comprend deux mélangeurs 101a et 101b, un déphaseur de $\pi/2$ 102 et un oscillateur local hyperfréquence 103. Deux premières entrées des mélangeurs 101a et 101b sont reliées à une zone de réception de l'antenne 1a respectivement directement et à travers le déphaseur de $\pi/2$ 102 tandis que deux secondes entrées respectives des mélangeurs 101a et 101b reçoivent un signal hyperfréquence SH produit par l'oscillateur local hyperfréquence 103. Des sorties des deux mélangeurs 101a et 101b sont reliées à des entrées respectives du circuit de traitement analogique 11. Le signal hyperfréquence SH constitue un signal porteur également appliqué à une zone d'émission de l'antenne 1a. L'antenne 1a de la station centrale 1 est par exemple une antenne plane à motifs imprimés de forme carrée, les motifs ayant des côtés de dimension égale à $\lambda/2$, où $\lambda$ est la longueur d'onde du signal hyperfréquence SH. Les zones d'émission et de réception de l'antenne 1a consistent chacune par exemple en deux motifs carrés reliés ensemble et imprimés sur une même plaque imprimée double face. Selon une réalisation telle que décrite dans la FR-A-2650905, les deux démodulateurs 101a et 101b et le déphaseur de $\pi/2$ 102 peuvent être supportés par la plaque imprimée.

Le fonctionnement du système de mesure selon l'invention incluant la station centrale 1 et l'extrémité passive 2 est maintenant décrit de façon globale en référence à la Fig. 1.

L'oscillateur local 103 génère le signal hyperfréquence SH à la fréquence porteuse F correspondant à la longueur d'onde $\lambda$. Le signal SH est appliqué à la zone d'émission de l'antenne 1a pour produire une onde d'émission OE émise à travers la distance d séparant l'antenne 1a de l'antenne 2a de l'extrémité passive 2. L'antenne 2a consiste par exemple en une antenne plane incluant un unique motif carré imprimé sur une petite plaque imprimée double face. L'antenne 2a reçoit l'onde d'émission OE. Des première et seconde lignes de transmission distinctes relient respectivement l'antenne 2a à une entrée du circuit de modulation de phase 20 et à une entrée du circuit de redressement et filtrage 21. La sortie du circuit 21 est reliée à une entrée d'alimentation 220 pour alimenter l'horloge 22. La sortie de l'horloge 22 est reliée à une entrée de commande de commutation 200 du circuit de modulation de phase 20. L'antenne 2a produit un signal hyperfréquence SR dans la première ligne reliée au circuit de redressement et filtrage 21 en réponse à la réception de l'onde d'émission OE. Le circuit de redressement et filtrage 21 est un circuit classique par exemple du type à diode de redressement et capacité de filtrage et redresse et filtre le signal SR pour produire une tension continue d'alimentation 220 de l'horloge 22 pour alimenter au moins partiellement cette dernière qui, en réponse, applique un signal numérique, qui est selon l'invention un signal d'horloge CL, à l'entrée 200. La batterie électrique miniature B est prévue, si nécessaire, pour fournir à l'horloge 22 une tension continue d'alimentation supplémentaire.

Le circuit de modulation de phase 20 comprend par exemple un transistor à effet de champ tel que décrit dans la FR-A-2650905. Un signal incident SI à fréquence porteuse F est fourni par l'antenne 2a de l'extrémité passive 2 dans la seconde ligne en réponse à la réception de l'onde émise OE et est appliqué au drain dudit transistor. La source du transistor est à la masse tandis que la grille du transistor reçoit le signal d'horloge CL. L'horloge 22 étant activée sur réception de l'onde émise OE, le signal d'horloge CL est à un niveau de tension haut durant des premières demi-périodes; le transistor est saturé et la seconde ligne recevant le signal incident SI est terminée par un quasi court-circuit. Au niveau de ce quasi court-circuit, le champ électrique du signal incident SI est réfléchi en un signal SMR et satisfait aux conditions aux limites en présentant une phase en opposition par rapport au champ électrique incident. Inversement, durant des secondes demi-périodes, lorsque le signal d'horloge présente un niveau de tension bas, le transistor à effet de champ dans le circuit 20 est bloqué et la seconde ligne est terminée par un quasi circuit ouvert; le champ électrique du signal SI est réfléchi en phase avec le signal incident. Ainsi, respectivement lors des première et seconde demi-périodes d'horloge CL, le signal réfléchi SMR est un signal modulé en phase dont l'onde porteuse issue du signal incident SI présente des déphasages de 0 et $\pi$ en réponse aux niveaux bas et haut du signal d'horloge CL. Ce signal réfléchi SMR est transmis à l'antenne 2a pour être radiodiffusé en une onde modulée OM vers l'antenne 1a du circuit d'émission et de démodulation 10 dans la station centrale 1.

En réponse à l'onde modulée OM captée par la zone de réception de l'antenne 1a, un signal modulé SM est appliqué aux deux premières entrées des deux mélangeurs 101a et 101b respectivement directement et à travers le déphaseur de π/2 102. Les deux secondes entrées desdits mélangeurs reçoivent le signal hyperfréquence SH produit par l'oscillateur local 103. Deux signaux composants démodulés X et Y sont alors fournis par les sorties des deux mélangeurs respectifs 101a et 101b au circuit de traitement analogique 11. Le circuit 10 constitue un circuit de démodulation cohérente à deux voies de démodulation de type classique.

En supposant que la phase du signal hyperfréquence SH est une phase de référence égale à zéro, le signal SH s'écrit sous la forme

$$SH = \sin(\omega t), \text{ avec } \omega = 2\pi F.$$

Le signal SH est transmis en l'onde émise OE pour être modulé par le signal d'horloge CL dans le circuit de modulation de phase 20 de l'extrémité passive 2, et est "réfléchi" en une onde modulée OM pour produire le signal modulé SM. Ce dernier s'écrit :

$$SM = \sin(\omega t + \phi + \delta).$$

$\phi$ désigne un déphasage qui est introduit par un délai de temps de propagation aller et retour entre l'émission de l'onde émise OE et la réception de l'onde modulée OM par l'antenne 1a et qui est donc proportionnel à la distance d séparant la station 1 et l'extrémité 2. $\delta$ est le déphasage égal à O ou $\pi$ introduit par le circuit de modulation de phase 20 à la fréquence du signal d'horloge CL.

Ainsi, les deux signaux appliqués aux deux premières entrées des deux mélangeurs 101a et 101b s'écrivent respectivement :

$$SMX = \sin(\omega t + \phi + \delta)$$
$$SMY = \sin(\omega t + \phi + \delta + \pi/2)$$

soit :

$$SMX = \sin(\omega t + \phi + \delta)$$
$$SMY = \cos(\omega t + \phi + \delta).$$

Aux sorties respectives des deux mélangeurs, les signaux composants démodulés s'expriment sous la forme :

$$X = \sin(\omega t).\sin(\omega t + \phi + \delta)$$
$$Y = \sin(\omega t).\cos(\omega t + \phi + \delta).$$

Par un filtrage des deux signaux composants X et Y réalisé dans le circuit analogique 11, et consistant à rejeter l'harmonique ayant une fréquence double de la fréquence $F = \dfrac{\omega}{2\pi}$, deux signaux filtrés sont produits et s'écrivent sous la forme :

$$X_F = \cos(\phi + \delta)$$
$$Y_F = \sin(\phi + \delta).$$

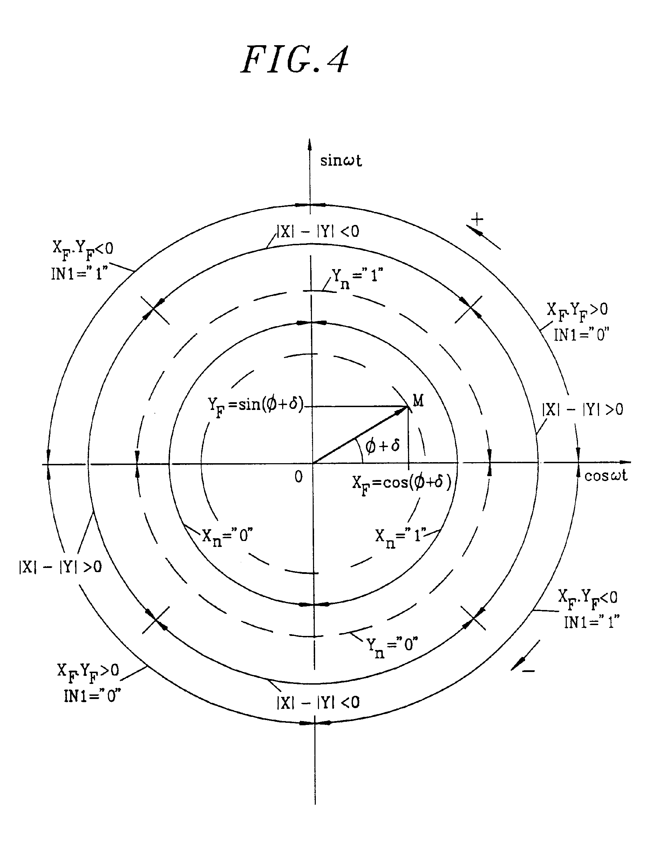

Avant de décrire plus précisément les structures et fonctionnements des circuits 11 et 12, il est fait référence à la Fig. 4 pour décrire de façon empirique le fonctionnement du système de mesure selon l'invention.

Dans le diagramme de FRESNEL montré à la Fig. 4, un point M désignant l'extrémité d'un vecteur $\overline{OM}$ ayant pour origine le centre du diagramme et pour composantes $X_F$ et $Y_F$, se déplace sur un cercle de centre O en fonction de la phase $(\phi + \delta)$ des deux signaux composants. Lors d'un déplacement relatif de l'extrémité passive 2 par rapport à la station centrale 1, le déphasage $\phi$ dans la phase des deux signaux composants $X_F$ et $Y_F$ augmente et diminue en fonction d'un éloignement ou d'un rapprochement de l'extrémité 2 par rapport à la station centrale 1. Le vecteur $\overline{OM}$, dans cette représentation vectorielle, tourne suivant l'un et l'autre sens. Selon l'invention, des incrémentations et décrémentations d'un compteur-décompteur 126 inclus dans le circuit de traitement numérique 12 sont réalisées en fonction du sens de rotation du vecteur $\overline{OM}$ afin que le contenu dudit compteur-décompteur soit représentatif à chaque instant de la distance d séparant la station centrale 1 de l'extrémité passive 2.

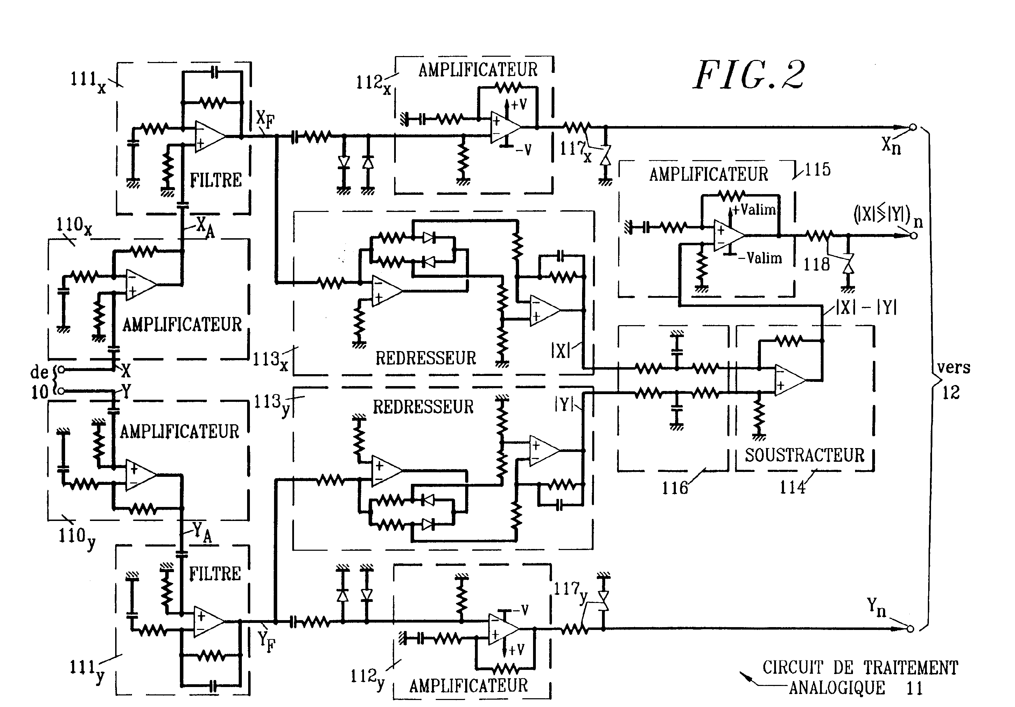

En référence à la Fig. 2, le circuit de traitement analogique 11 comprend essentiellement divers circuits fonctionnels élémentaires, tels que deux amplificateurs à gain positif de préamplification $110_x$ et $110_y$, deux filtres passe-bande du premier ordre $111_x$ et $111_y$, deux amplificateurs $112_x$, $112_y$, deux redresseurs à double-alternance $113_x$ et $113_y$, un soustracteur 114 et un amplificateur 115.

Il est à noter dès à présent que les indices x et y utilisés dans les repères de chacun des circuits élémentaires de la Fig. 2 sont relatifs respectivement aux deux voies du circuit de démodulation 10 transportant les signaux X et Y.

Dans la description ci-dessous du circuit analogique illustré à la Fig. 2, ne sont pas précisés les composants dans chacun des circuits élémentaires, des réalisations de tels circuits étant connues de l'homme du métier. Néanmoins, une description plus détaillée concernant des circuits élémentaires qui sont d'intérêt pour le fonctionnement du circuit analogique 11 afin d'effectuer une mesure de distance selon l'invention est fournie.

Tous les circuits élémentaires précités sont réalisés à partir d'amplificateurs opérationnels, par exemple du type LF357, bien qu'ils puissent être conçus sans amplificateurs opérationnels.

En se reportant à la Fig. 2, les sorties des deux amplificateurs de préamplification $110_x$ et $110_y$ sont reliées respectivement à des entrées des filtres $111_x$ et $111_y$. Les sorties de ces derniers sont connectées respectivement à des entrées des amplificateurs $112_x$ et $112_y$ et à des entrées des redresseurs à double-alternance $113_x$ et $113_y$. Les sorties des deux redresseurs $113_x$ et $113_y$ sont reliées à deux entrées respectives du soustracteur 114 dont la sortie est appliquée à l'entrée de l'amplificateur 115. Les sorties de chacun des amplificateurs $112_x$, $112_y$ et 115 sont connectées à des entrées respectives du circuit de traitement numérique 12 à travers des étages de stabilisation en tension respectifs $117_x$, $117_y$ et 118. Chaque étage de stabilisation en tension est constitué d'une résistance en série avec la sortie de l'amplificateur respectif, et d'une diode de Zener en parallèle reliée à la masse, et a un double rôle :

- la stabilisation en tension du signal issu de l'amplificateur respectif avant d'être appliqué au circuit numérique 12;
- la génération d'un signal à deux niveaux, typiquement O V et 5 V, en fonction respectivement des niveaux de sortie de l'amplificateur respectif - 15 V et 15 V, qui est compatible avec les signaux logiques définis dans le circuit numérique 12.

En revenant sur la gauche de la Fig. 2, les deux signaux X et Y extraits des deux voies de démodulation du circuit 10 sont appliqués aux deux entrées des amplificateurs de préamplification respectifs $110_x$ et $110_y$ qui produisent deux signaux amplifiés respectifs $X_A$ et $Y_A$ fournis aux filtres passe-bande respectifs $111_x$ et $111_y$. Les deux filtres $111_x$ et $111_y$ ont chacun une bande de fréquence centrée sur la fréquence du signal d'horloge généré par l'horloge 22 incluse dans l'extrémité passive 2 montrée à la Fig. 1. La rejection des harmoniques des signaux $X_A$ et $X_B$ à la fréquence double de la fréquence F de l'oscillateur local 103, obtenus par la démodulation cohérente, s'effectue naturellement par les amplificateurs basse fréquence $110_x$ et $110_y$.

Les deux filtres $111_x$ et $111_y$ produisent respectivement les deux signaux filtrés $X_F$ et $Y_F$ :

$$X_F = \cos(\phi + \delta)$$
$$Y_F = \sin(\phi + \delta)$$

à un coefficient multiplicatif près déterminés par les amplificateurs de préamplification $110_x$ et $110_y$.

Les signaux filtrés $X_F$ et $Y_F$ sont appliqués aux entrées respectives des deux amplificateurs $112_x$ et $112_y$. Les deux amplificateurs $112_x$ et $112_y$ sont conçus pour fonctionner en régime non linéaire. A cette fin, des composants appropriés respectifs inclus dans les amplificateurs $112_x$ et $112_y$ sont prévus pour conférer à ces derniers des gains élevés. Ainsi, lorsque le signal filtré $X_F$, respectivement $Y_F$, est sensiblement supérieur à zéro, le signal issu de l'amplificateur $112_x$, respectivement $112_y$, fonctionnant en régime non linéaire, a un niveau de tension égal à la tension positive d'alimentation +Valim de l'amplificateur opérationnel inclus dans l'amplificateur $112_x$, respectivement $112_y$. Inversement, lorsque le signal filtré $X_F$ respectivement $Y_F$, est sensiblement inférieur à zéro, le signal issu de l'amplificateur $112_x$, respectivement $112_y$, a un niveau de tension égal à -Valim, tension "négative" d'alimentation dudit amplificateur opérationnel. Les signaux sortant des amplificateurs $102_x$ et $102_y$ sont respectivement appliqués aux deux étages de stabilisation en tension $117_x$ et $117_y$ qui produisent des signaux numériques $X_n$ et $Y_n$ ayant des premier et second niveaux de tension + 0 volts et + 5 volts correspondant aux premier et second niveaux logiques "0" et "1" définis dans le circuit 12, respectivement. Les signaux $X_n$ et $Y_n$ sont ainsi représentatifs des signes des signaux démodulés et filtrés $X_F$ et $Y_F$.

En référence à la Fig. 4, quatre secteurs angulaires correspondant à des angles plats sont indiqués autour du cercle du diagramme de FRESNEL; deux sont schématisés par des demi-cercles en traits continus, deux par des demi-cercles en traits discontinus. Le signal numérique $X_n$ issu de l'étage de stabilisation en tension $117_x$ a le second niveau logique "1" lorsque le signal filtré $X_F$ appliqué à l'entrée de l'amplificateur $112_x$ a une amplitude supérieure à zéro ou positive. Inversement, le signal numérique $X_n$ a le premier niveau de tension "O" lorsque ledit signal filtré $Y_F$ a une amplitude inférieure à zéro ou négative. Comme montré sur la Fig. 4, les deux demi-cercles en traits continus définis sur des intervalles $[\pi/2, -\pi/2]$ et $[-\pi/2, \pi/2]$ correspondent respectivement aux premier et second niveaux logiques du signal $X_n$. D'une manière analogue, le signal numérique $Y_n$ offre des niveaux logiques "1" et "O" lorsque le signal filtré $Y_F$ appliqué à l'entrée de l'amplificateur $112_y$ a une amplitude supérieure et inférieure à zéro, respectivement, ce qui correspond aux deux demi-cercles en traits discontinus $[O, \pi]$ et $[-\pi, O]$.

Les signaux filtrés $X_F$ et $Y_F$ sont également appliqués aux deux redresseurs à double-alternance respectifs $113_x$ et $113_y$ pour produire des signaux redressés $|X|$ et $|Y|$ représentatifs des modules des signaux $X_F$ et $Y_F$. Les deux signaux redressés $|X|$ et $|Y|$ sont appliqués à deux entrées respectives du soustracteur 114 produisant un signal de différence de modules $(|X|-|Y|)$, égal à la différence des signaux redressés $|X|$ et $|Y|$. Une double cellule de lissage 116 peut être interposée entre les sorties des redresseurs à double-alternance $113_x$ et $113_y$ et le soustracteur 114 pour parfaire le redressement. Le signal de différence $(|X|-|Y|)$ est appliqué à l'entrée de l'amplificateur 115 suivi de l'étage de stabilisation en tension 118. L'amplificateur 115 est de type analogue aux amplificateurs $112x$ et $112_y$. A la sortie de l'étage de stabilisation en tension 118, un signal numérique de basculement $(|X| \leq |Y|)_n$ est obtenu, défini par :

$$(|X| \leq |Y|)_n = \text{"1" lorsque } (|X|-|Y|) \geqq 0$$
$$\text{et } (|X| \leq |Y|)_n = \text{"O" lorsque } (|X|-|Y|) < 0$$

Cela signifie que, pour des valeurs du signal de différence de modules $(|X|-|Y|)$ positive et négative, le signal numérique de basculement $(|X| \leq |Y|)_n$ est respectivement au second niveau "1" et au premier niveau "O", comme indiqué par deux paires de quadrants $[7\pi/4, \pi/4]$, $[3\pi/4, 5\pi/4]$ et $[\pi/4, 3\pi/4)$, $[5\pi/4,$

7$\pi$/4] dans la Fig. 4.

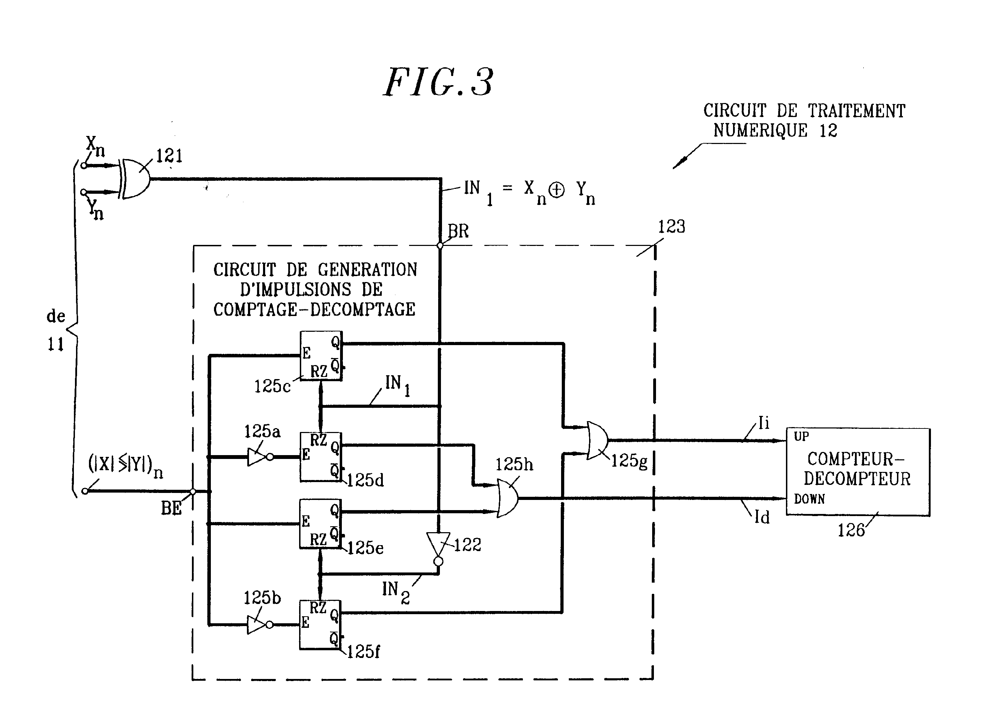

En référence à la Fig. 3, il est maintenant décrit le circuit de traitement numérique 12. Le circuit 12 comprend une porte OU-EXCLUSIF à deux entrées 121, un circuit de génération d'impulsions de comptage-décomptage 123 et un compteur-décompteur 126.

Les signaux numériques $X_n$ et $Y_n$ sont appliqués aux deux entrées de la porte OU-EXCLUSIF 121 qui produit en réponse un premier signal logique, appelé premier signal d'inhibition $IN_1$. En se référant à la Fig. 4, il est à remarquer que les niveaux du premier signal d'inhibition $IN_1$ sont représentatifs du signe du produit des signaux $X_F$ et $Y_F$. Selon la réalisation préférée décrite ici, le signal $IN_1$ a des premier et second niveaux logiques "O" et "1" respectivement lorsque le produit des signaux $X_F$ et $Y_F$ est positif et négatif.

Le signal $IN_1$ est appliqué à une borne de remise à zéro BR du circuit 123, tandis que le signal $(|X| \leq |Y|)_n$ est appliqué à une borne d'entrée BE du circuit 123.

Le circuit de génération d'impulsions de comptage-décomptage 125 comprend trois inverseurs 122, 125a et 125b, quatre bascules monostables 125c, 125d, 125e et 125f et deux portes OU à deux entrées 125g et 125h. Les quatre bascules monostables du circuit 125 sont accouplées par couples 125c-125d et 125e-125f, par des liaisons communes de leurs entrées de mise à zéro RZ respectives. Les entrées E des premières bascules 125c et 125e dans chacun des couples sont reliées à la borne BE et reçoivent directement le signal logique $(|X| \leq |Y|)_n$. Les entrées des secondes bascules 125d et 125f reçoivent le signal $(|X| \leq |Y|)_n$ respectivement à travers la borne BE et les inverseurs 125a et 125b. Les premières bascules 125c et 125e, dites bascules à entrée directe, détectent des premières transitions du premier niveau "0" au second niveau "1" dans le signal de basculement $(|X| \leq |Y|)_n$ pour produire des impulsions. Une durée T de ces impulsions dépend de circuits résistifs-capacitifs (non représentés) dans les bascules monostables. Il est à noter dès à présent que des circuits résistifs-capacitifs sont choisis pour chacune des bascules afin que ces dernières produisent des impulsions de largeur suffisante pour permettre une incrémentation ou décrémentation d'un compte du compteur-décompteur 126, comme il sera vu par la suite. Les secondes bascules 125d et 125f, dites bascules à entrée inversée, détectent des secondes transitions du second niveau "1" au premier niveau "O" dans le signal de basculement $(|X| \leq |Y|)_n$ pour produire également des impulsions.

Les sorties Q des première et seconde bascules monostables 125c et 125d du premier couple sont combinées respectivement avec les sorties Q des seconde et première bascules monostables 125f et 125e du second couple pour être reliées respectivement aux entrées des portes OU 125g et 125h. En supposant que chaque liaison commune de remise à zéro RZ de chaque couple de bascules ne reçoit aucun signal au second niveau "1", des impulsions au second niveau "1" Ii et Id sont obtenues aux sorties des portes OU 125g et 125h en réponse aux premières et secondes transitions du signal $(|X| \leq |Y|)_n$, les durées de ces impulsions étant déterminées par les circuits résistifs-capacitifs inclus dans les bascules et qui sont de préférence identiques. Les sorties des portes OU 125g et 125h sont reliées respectivement à des entrées d'incrémentation UP et de décrémentation DOWN du compteur-décompteur 126. Selon la réalisation illustrée, la sortie de la porte OU-EXCLUSIF 121 est reliée, via la borne BR, aux liaisons de remise à zéro des premier et second couples de bascules monostables 125c-125d et 125e-125f respectivement directement et à travers l'inverseur 122. Ainsi, la liaison de remise à zéro du premier couple reçoit le premier signal d'inhibition $IN_1$ tandis que la liaison de remise à zéro du second couple reçoit le signal complémentaire du signal $IN_1$, appelé second signal d'inhibition $IN_2$.

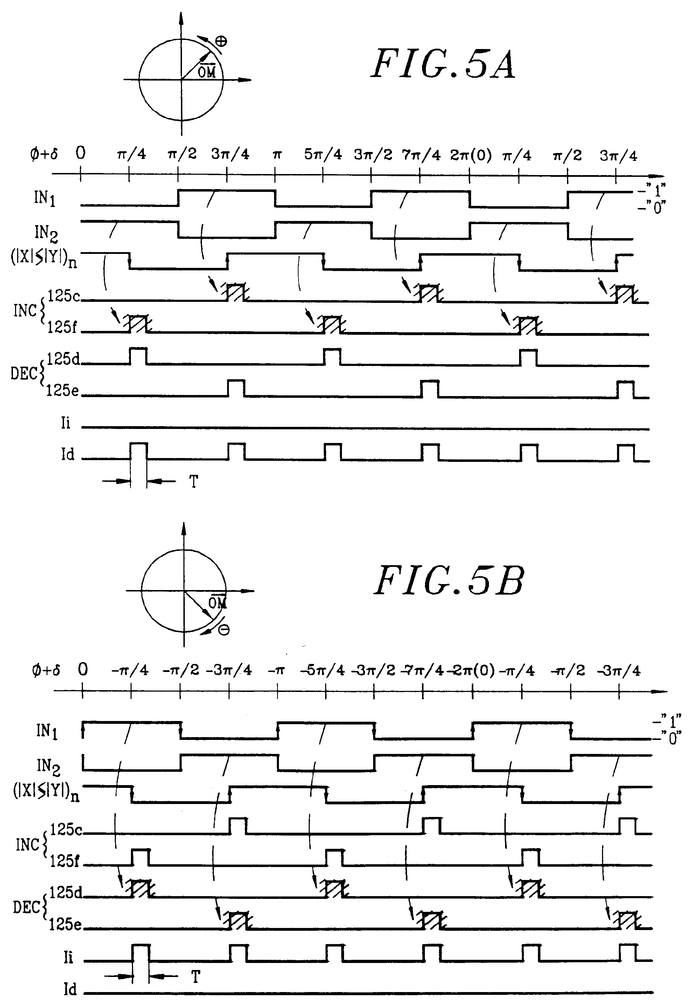

En référence aux Figs. 5A et 5B, les deux diagrammes temporels montrent le fonctionnement du circuit de traitement numérique 12 pour les deux sens de déplacement relatif entre la station centrale 1 et l'extrémité passive 2 correspondant à un rapprochement et un éloignement relatif.

Dans le premier diagramme temporel de la Fig. 5A, il est supposé que le vecteur $\overline{OM}$ effectue une rotation selon le sens trigonométrique positif, relatif à un sens de déplacement donné entre la station centrale 1 et l'extrémité passive 2. Les deux premières lignes du diagramme temporel montrent les états respectifs des premier et second signaux d'inhibition $IN_1$ et $IN_2$ appliqués respectivement aux liaisons de remise à zéro du premier et second couple de bascules, en fonction de la phase ($\phi + \delta$) du vecteur $\overline{OM}$. Une troisième ligne montre la valeur du signal numérique $(|X| \leq |Y|)$ appliqué à l'entrée du circuit de génération d'impulsions de comptage-décomptage 123 en fonction de la phase ($\phi + \delta$). Les quatrième et sixième lignes montrent les impulsions respectives produites par les première et seconde bascules du premier couple 125c-125d tandis que les cinquième et septième lignes sont relatives aux impulsions produites par les seconde et première bascules du second couple 125e-125f.

Les sorties des bascules du premier couple 125c-125d sont inhibées par le second niveau "1" du premier signal d'inhibition $IN_1$, et les sorties des bascules du second couple 125e-125f sont inhibées par le second niveau "1" du second signal d'inhibition $IN_2$. Les impulsions produites par les bascules 125c et 125f sont inhibées respectivement par les seconds niveaux "1" des premier et second signaux d'inhibition $IN_1$ et $IN_2$, comme indiqué par des flèches en traits discontinus et des impulsions hachurées dans la Fig.

5A. Ainsi, seules les impulsions produites par les bascules 125d et 125e qui sont combinées dans la porte OU 125h en des impulsions de décrémentation Id appliquées à l'entrée DOWN du compteur-décompteur 126, décrémentent un compte du compteur-décompteur 126.

Le diagramme temporel de la Fig. 5B est relatif a un sens de rotation du vecteur $\overline{OM}$ selon le sens trigonométrique négatif et correspondant à un déplacement relatif opposé au sens décrit ci-dessus entre station centrale 1 et extrémité passive 2. Des résultats opposés à ceux indiqués précédemment sont obtenus, et seules des impulsions d'incrémentation Ii sortant de la porte OU 125g sont appliquées à l'entrée UP du compteur-décompteur 126.

La résolution d'un tel système dépend de quatre incrémentations ou décrémentations, lesquelles sont fonction du sens de déplacement relatif entre la station centrale 1 et l'extrémité passive 2, c'est-à-dire d'une augmentation ou d'une diminution de $2\pi$ de la phase ($\phi + \delta$). La résolution du système est "ajustable" par modification de la fréquence d'oscillation F de l'oscillateur 103 de la station centrale 1.

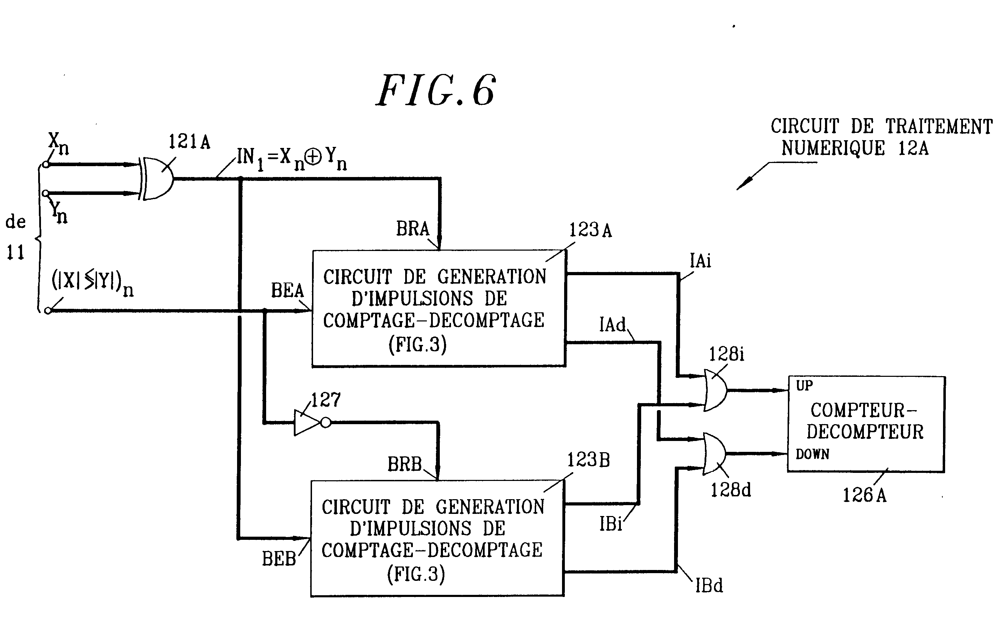

Le circuit de traitement numérique 12A montré à la Fig. 6 améliore encore la résolution du système de mesure de distance.

Le circuit 12A comprend, comme dans le circuit 12, une porte OU-EXCLUSIF 121A, un premier circuit de génération d'impulsions de comptage-décomptage 123A et un compteur-décompteur 126A, et en complément, un second circuit de génération d'impulsions de comptage-décomptage 123B, un inverseur 127 et deux portes OU à deux entrées 128i et 128d.

Les circuits 123A et 123B sont identiques au circuit 123 montré à la Fig. 3, et comprennent ainsi chacun deux couples de bascules monostables à entrée directe et à entrée inversée, et deux portes OU à deux entrées.

Les bornes BEA et BRA du premier circuit 123A relatives aux entrées des bascules monostables et aux entrées de remise à zéro reçoivent respectivement le signal $(|X| \leq |Y|)_n$ du circuit de traitement analogique 11, et le signal de produit $IN_1$ de la sortie de la porte 121A identique à la porte 121, comme pour le circuit 123. Par conséquent, des impulsions d'incrémentation IAi et de décrémentation IAd sont produites par deux sorties du circuit 123A et sont identiques aux impulsions Ii et Id.

Contrairement au premier circuit de génération d'impulsions 123A, le second circuit 123B à la borne d'entrée BEB relative aux entrées E des quatre bascules monostables qui reçoit le signal $IN_1$, et la borne de remise à zéro BRB qui reçoit le signal complémentaire du signal $(|X| \leq |Y|)_n$ par l'inverseur 127.

Sachant que les transitions dans les signaux $IN_1$ et $(|X| \leq |Y|)_n$ sont décalées les unes par rapport aux autres de $\pi/4$, les impulsions d'incrémentation IBi et IBd en sortie du second circuit 123B sont décalées de $\pi/4$ par rapport aux impulsions IAi et IAd en sortie du premier circuit 123A. D'autre part, puisque le rôle des signaux $IN_1$ et $(|X| \leq |Y|)_n$ est inversé dans les circuits 123A et 123B, les impulsions de décrémentation IAd et IBd sont produites par les portes 125h incluses dans les circuits 123A et 123B lors d'un déplacement relatif des stations correspondant à une rotation du vecteur $\overline{OM}$ selon le sens trigonométrique positif (Fig. 5A), tandis que des impulsions d'incrémentation IAi et IBi sont produites par les portes 125g incluses dans les circuits 123A et 123B lors d'un déplacement relatif des stations en sens contraire du précédent, correspondant à une rotation du vecteur $\overline{OM}$ selon le sens trigonométrique négatif (Fig. 5B).

Les impulsions IAi et IBi sont appliquées aux entrées de la porte 128i dont la sortie est reliée à l'entrée d'incrémentation UP du compteur-décompteur 126A. Les impulsions IAd et IBd sont appliquées aux entrées de la porte 128d dont la sortie est reliée à l'entrée de décrémentation DOWN du compteur-décompteur 126A. Dans ces conditions, huit impulsions décalées de $\pi/4$ sont appliquées à l'une des entrées du compteur-décompteur 126A pendant un déplacement correspondant à une variation de la phase ($\phi + \delta$) de $2\pi$. La résolution du système de mesure incluant le circuit 12A est ainsi améliorée d'un facteur deux comparativement au système muni du circuit 12.

Il est à noter qu'une autre variante du circuit de traitement numérique peut inclure le circuit 123B avec l'inverseur 127 à la place du circuit 123, identique au 123A, dans la Fig. 3.

**Revendications**

1. Système pour mesurer la distance (d) entre des première et seconde stations (1, 2) mobiles l'une par rapport à l'autre, la seconde station (2) comprenant des moyens pour moduler, par un signal numérique (CL), un signal porteur (SH, OE) émis par la première station (1) en un signal modulé à deux états de phase (SMR, OM) qui est émis vers la première station, et la première station comprenant des moyens de démodulation et filtrage (10, 111x, 111y) pour démoduler le signal modulé en deux signaux démodulés et filtrés en quadrature de phase ($X_F, Y_F$), des moyens ($112_x$, $112_y$, 121, 121A) pour produire un premier signal logique (IN1) ayant des niveaux logiques dépendants du signe du produit ($X_F.Y_F$) des signaux démodulés et filtrés, et des moyens ($113_x$, $113_y$, 114, 115) pour produire un second signal logique (($|X| \geq |Y|)_n$) ayant des niveaux logiques dépendant du signe de la différence ($|X| - |Y|$) des modules des signaux démodulés et filtrés, caractérisé en ce que la première station (1) comprend, en outre,

- un premier moyen (123, 123B) pour générer des premières et secondes impulsions (Ii, Id; IBi, IBd) respectivement

en réponse à des premières et secondes transitions de l'un des premier et second signaux logiques ($IN_1$, $(|X| \geq |Y|)_n$) respectivement lorsque l'autre des premier et second signaux logiques $((|X| \geq |Y|)_n$, IN1) est à des premier et second niveaux logiques ("O", "1"), et

en réponse aux première et seconde transitions dudit un des premier et second signaux logiques respectivement lorsque ledit autre des premier et second signaux logiques est aux second et premier niveaux logiques ("1", "O"),

- et un moyen de comptage-décomptage (126) pour compter les premières impulsions (Ii; IBi) et décompter les secondes impulsions (Id; IBd) afin de produire un compte d'impulsions représentatif de ladite distance (d).

2. Système conforme à la revendication 1, caractérisé en ce que le premier moyen pour générer des impulsions (123) comprend

un premier couple de premiers et seconds moyens (125c, 125d) pour détecter respectivement les premières et secondes transitions dudit un des premier et second signaux logiques ($IN_1$, $(|X| \geq |Y|)_n$) afin de produire des impulsions de détection de transition lorsque ledit autre des premier et second signaux logiques $((|X| \geq |Y|)_n$, IN1) est au premier niveau logique ("0"),

un second couple de premiers et seconds moyens (125e, 125f) pour détecter respectivement les premières et secondes transitions dudit un des premier et second signaux logiques afin de produire des impulsions de détection de transition lorsque ledit autre des premier et second signaux logiques est au second niveau logique ("1"),

des premiers moyens (125g) pour combiner les impulsions de détection des premiers moyens pour détecter (125c) du premier couple et des seconds moyens pour détecter (125f) du second couple en lesdites premières impulsions (Ii; IBi), et

des seconds moyens (125h) pour combiner les impulsions de détection des seconds moyens pour détecter (125d) dans le premier couple et des premiers moyens pour détecter (125e) dans le second couple en lesdites secondes impulsions (Id; IBd).

3. Système conforme à la revendication 2, dans lequel chacun des premiers et seconds moyens pour détecter comprennent une bascule monostable (125c-125f), les bascules monostables des premiers et seconds moyens pour détecter dans chacun desdits couples recevant respectivement directement et à travers un inverseur (125a, 125b) ledit un des premier et second signaux logiques, et les bascules monostables dans les premiers et seconds couples étant respectivement mis à zéro en réponse aux second et premier niveaux logiques ("1", "O") dudit autre des premier et second signaux logiques.

4. Système conforme à l'une quelconque des revendications 1 à 3, caractérisé en ce qu'il comprend un second moyen (123B) pour générer des premières et secondes impulsions (IBi, IBd) qui est identique au premier moyen pour générer (123A) et pour lequel ledit un des premier et second signaux logiques est remplacé par ledit autre des premier et second signaux logiques, et ledit autre des premier et second signaux logiques est remplacé par ledit un des premier et second signaux logiques,

lesdits moyens de comptage-décomptage (128i, 128d, 126A) comptant les premières impulsions (IAi, IBi) générées par les premier et second moyens pour générer, et décomptant les secondes impulsions (IAd, IBd) générées par les premier et second moyens pour générer.

5. Système conforme à l'une quelconque des revendications 1 à 4, caractérisé en ce que le signal numérique modulant le signal porteur dans la seconde station (2) est un signal d'horloge (CL).

**Patentansprüche**

1. System zur Messung des Abstandes (d) zwischen einer ersten und einer zweiten Station (1, 2), wobei: die eine im Vergleich zu der anderen beweglich ist, die zweite Station (2) Mittel enthält, um durch ein numerisches Signal (CL) ein von der ersten Station (1) gesendetes Trägersignal (SH, OE) zu einem bei zwei Phasenzuständen (SMR, OM) modulierten Signal zu modulieren, das zu der ersten Station gesendet wird, und die erste Station Mittel zum Demodulieren und Filtern (10, 111x, 111y) enthält, um das modulierte Signal zu zwei demodulierten und um 90° phasenverschobenen filtrierten Signalen ($X_F$, $Y_F$) zu demodulieren, Mittel ($112_x$, $112_y$, 121, 121A), um ein erstes logisches Signal (IN1) mit vom Vorzeichen des Produkts ($X_F.Y_F$) der demodulierten und filtrierten Signalen abhängigen logischen Pegeln zu erzeugen, und Mittel ($113_x$, $113_y$, 114, 115), um ein zweites logisches Signal $((|X| < |Y|)_n)$ mit vom Vorzeichen der Differenz ($|X|-|Y|$) der Modulen der demodulierten und filtrierten Signalen abhängigen logischen Pegeln zu erzeugen, dadurch gekennzeichnet, daß die erste Station (1) außerdem enthält:

- ein erstes Mittel (123, 123B), um erste und zweite Impulse (Ii, Id; IBi, IBd) zu erzeugen, jeweils als Antwort auf erste und zweite Übergänge des einen unter dem ersten und zweiten logischen Signal (IN1, $(|X|<|Y|)_n$) jeweils wenn das andere unter dem ersten und zweiten logischen Signal $((|X|<|Y|)_n$, IN1) beim ersten und zweiten logischen Pegel ("0", "1") ist, und als Antwort auf den ersten und zweiten Übergang des besagten einen unter dem ersten und zweiten logischen Signal, jeweils wenn sich das besagte andere unter dem ersten und zweiten logischen Signal bei dem zweiten und ersten logischen Pegel ("1", "0") befindet, und

- ein Mittel zum Vorwärts-Rückwärtszählen(126), um die ersten Impulse (Ii; IBi) vorwärtszuzählen und die zweiten Impulse (Id; IBd) rückwärtszuzählen, damit eine Zahl von Impulsen erzeugt wird, die den besagten Abstand (d) wiedergibt.

2. System nach Anspruch 1, dadurch gekennzeichnet, daß das erste Mittel zur Erzeugung von Impulsen (123) ein erstes Paar von ersten und zweiten Mitteln (125c, 125d) enthält, um jeweils die ersten und zweiten Übergänge des besagten einen unter dem ersten und zweiten logischen Signal (IN1, $(|X| \geqslant |Y|)_n$) zu erkennen, damit Impulse zur Übergangserfassung erzeugt werden, wenn sich das besagte andere unter dem ersten und zweiten logischen Signal $((|X| \geqslant |Y|)_n$, IN1) bei dem ersten logischen Pegel ("0") befindet, ein zweites Paar von ersten und zweiten Mitteln (125e, 125f) enthält, um jeweils die ersten und zweiten Übergänge des besagten einen unter dem ersten und zweiten logischen Signal zu erkennen, damit Impulse zur Übergangserfassung erzeugt werden, wenn sich das besagte andere unter dem ersten und zweiten logischen Signal bei dem zweiten logischen Pegel ("1") befindet, erste Mittel (125g) enthält, um die Erkennungsimpulse der ersten Erkennungsmittel (125c) des ersten Paares und der zweiten Erkennungsmittel (125f) des zweiten Paares in den besagten ersten Impulsen (Ii; IBi) zu kombinieren, und zweite Mittel (125h) enthält, um die Erkennungsimpulse der zweiten Erkennungsmittel (135d) in dem ersten Paar und der ersten Erkennungsmittel (125e) in dem zweiten Paar in den besagten zweiten Impulsen (Id; IBd) zu kombinieren.

3. System nach Anspruch 2, in welchem je die ersten und zweiten Erkennungsmittel eine monostabile Kippschaltung (12Sc-125f) beinhalten, wobei die monostabilen Kippschaltungen der ersten und zweiten Erkennungsmittel in jedem der besagten Paare jeweils direkt und durch einen Umschalter (125a, 125b) das besagte eine unter dem ersten und zweiten logischen Signal empfängt, und wobei die monostabilen Kippschalter in den ersten und zweiten Paaren jeweils auf Null gesetzt werden, als Antwort auf den zweiten und ersten logischen Pegel ("1", "0") des besagten anderen unter dem ersten und zweiten logischen Signal.

4. System nach irgendeinem der Ansprüche 1 bis 3, dadurch gekennzeichnet, daß es enthält: ein zweites Mittel zur Erzeugung (123B) von ersten und zweiten Impulsen (IBi, IBd) , welches dem ersten Erzeugungsmittel (123A) identisch ist und für welches das besagte eine unter dem ersten und zweiten logischen signal durch das besagte andere unter dem ersten und zweiten logischen Signal ersetzt wird, und das besagte andere unter dem ersten und zweiten logischen Signal durch das besagte eine unter dem ersten und zweiten logischen Signal ersetzt wird, wobei besagte Mittel zum Vorwärts-Rückwärtszählen (128i, 128d, 126A) die von den ersten und zweiten Erzeugungsmitteln erzeugten ersten Impulse (IAi, IBi) vorwärtszählen und die von den ersten und zweiten Erzeugungsmitteln erzeugten zweiten Impulse (IAd, IBd) rückwärtszählen.

5. System nach irgendeinem der Ansprüche 1 bis 4, dadurch gekennzeichnet, daß das numerische Signal, das das Trägersignal in der zweiten Station (2) moduliert, ein Taktsignal (CL) ist.

**Claims**

1. System for measuring the distance (d) between first and second stations (1, 2) mobile with regard to one another, the second station (2) comprising means for modulating a carrier signal (SH, OE) emitted by the first station (1) by a digital signal (CL) into a two-phase-state modulated signal (SMR, OM) which is emitted to the first station, and the first station comprising demodulating and filtering means (10, 111x, 111y) for demodulating the modulated signal into two phase-quadrature demodulated and filtered signals ($X_F$, $Y_F$) means means ($112_x$, $121_y$, 121, 121A) for deriving a first logic signal (IN1) having logic levels dependent on the sign of the product ($X_F.Y_F$) of the demodulated and filtered signals, and means ($113_x$, $113_y$, 114, 115) for deriving a second logic signal

$((|X| \geq |Y|)_n)$ having logic levels dependent on the sign of the difference $(|X| - |Y|)$ of the moduli of the demodulated and filtered signals, characterized in that the first station (1) further comprises

- a first means (123, 123B) for generating first and second pulses (Ii, Id; IBi, IBd) respectively

  in response to first and second transitions of one of the first and second logic signals ($IN_1$, $(|X| \geq |Y|)_n$) respectively when the other one of the first and second logic signals $((|X| \geq |Y|)_n$, IN1) is at first and second logic levels ("0", "1"), and

  in response to the first and second transitions of said one of the first and second logic signals respectively when said other one of the first and second logic signals is at the second and first logic levels ("1", "0"),

- and a up-down counting means (126) for counting up the first pulses (Ii; IBi) and counting down the second pulses (Id; IBd) thereby deriving a pulse count representative of said distance (d).

2. System according to claim 1, characterized in that the first pulses generating means (123) comprises

   a first couple of first and second means (125c, 125d) for respectively detecting the first and second transitions of said one of the first and second logic signals ($IN_1$, $(|X| \geq |Y|)_n$) thereby deriving transition detection pulses when said other one of the first and second logic signals $((|X| \geq |Y|)_n$, $IN_1$) is at the first logic level ("0"), a second couple of first and second means (125e, 125f) for respectively detecting the first and second transitions of said one of the first and second logic signals thereby deriving transition detection pulses when said other one of the first and second logic signals is at the second logic level ("1"), first means (125g) for combining the detection pulses of the first detecting means (125c) of the first couple and of the second detecting means (125f) of the second couple into said first pulses (Ii; IBi), and second means (125h) for combining the detection pulses of the second detecting means (125d) in the first couple and of the first dectecting means (125e) in the second couple into said second pulses (Id; IBd).

3. System according to claim 2, in which each of the first and second detecting means comprise a monostable flip-flop (125c-125f), the monostable flip-flops of the first and second detecting means in each of said couples respectively receiving directly and via an inverter (125a, 125b) said one of the first and second logic signals, and the monostable flip-flops in the first and second couples being respectively reset in response to the second and first logic levels ("0", "1") of said other one of the first and second logic signals.

4. System according to any one of claims 1 to 3, characterized in that it comprises

   a second means (123B) for generating first and second pulses (IBi, IBd) which is identical to the first generating means (123A) and for which said one of the first and second logic signals is replaced by said other one of the first and second logic signals, and said other one of the first and second logic signals is replaced by said one of the first and second logic signals, said up-down counting means (128i, 128d, 126A) counting up the first pulses (Ii; IBi) generated by the first and second generating means, and counting down the second pulses (IAd, IBd) generated by the first and second generating means.

5. System according to any one of claims 1 to 4, characterized in that the digital signal modulating the carrier signal in the second station (2) is a clock signal (CL).

FIG.1

# FIG.2

CIRCUIT DE TRAITEMENT ANALOGIQUE 11

vers 12

$X_n$

$Y_n$

$(|X| \lessgtr |Y|)_n$

AMPLIFICATEUR 115

+Valim

−Valim

118

$|X| - |Y|$

SOUSTRACTEUR 114

116

AMPLIFICATEUR 112x

+V

−V

117x

REDRESSEUR

REDRESSEUR

$|X|$

$|Y|$

113x

113y

AMPLIFICATEUR 112y

−V

+V

117y

FILTRE 111x

$X_F$

AMPLIFICATEUR 110x

$X_A$

X

Y

$Y_A$

AMPLIFICATEUR 110y

$Y_F$

FILTRE 111y

de 10

# FIG.3

CIRCUIT DE TRAITEMENT
NUMERIQUE 12

$IN_1 = X_n \oplus Y_n$

CIRCUIT DE GENERATION
D'IMPULSIONS DE
COMPTAGE-DECOMPTAGE

123

121

$X_n$   $Y_n$

BR

BE

$(|X| \leq |Y|)_n$

de 11

$IN_1$

$IN_2$

125c

125a

125b

125d

125e

125f

125g

125h

122

Ii

Id

UP

DOWN

COMPTEUR-
DECOMPTEUR

126

# FIG.4

# FIG.5A

# FIG.5B

## FIG.6

CIRCUIT DE TRAITEMENT
NUMERIQUE 12A

$IN_1 = X_n \oplus Y_n$

$X_n$
$Y_n$

121A

de 11

$(|X| \lessgtr |Y|)_n$

BRA

BEA

CIRCUIT DE GENERATION
D'IMPULSIONS DE
COMPTAGE-DECOMPTAGE
(FIG.3)

123A

IAi

IAd

127

BRB

BEB

CIRCUIT DE GENERATION
D'IMPULSIONS DE
COMPTAGE-DECOMPTAGE
(FIG.3)

123B

IBi

IBd

128i

128d

UP

COMPTEUR-
DECOMPTEUR

DOWN

126A

EP 0 533 525 B1

16